# EUROPEAN PATENT APPLICATION

(11) **EP 1 653 467 A1**
(43) Date of publication of application: **03.05.2006**
(21) Application number: 05109266.6
(22) Date of filing: 05.10.2005
(51) Int. Cl.: G11B 27/00, G11B 27/11, G11B 20/10

(54) **Video playback apparatus and video playback method**

(30) Priority: 29.10.2004 JP 2004316722
(71) Applicant: KABUSHIKI KAISHA TOSHIBA, Tokyo 105-8001 (JP)
(72) Inventor: Matsuhira, Noriyuki Toshiba Corporation, Minato-ku Tokyo 105-8001 (JP)
(74) Representative: Henkel, Feiler & Hänzel

(57) **Abstract**

A video playback apparatus includes a first decoding unit (1,2) configured to decode first content, a second decoding unit (3) configured to decode second content, a comparison unit (4) configured to compare the first and second content decoded by the first and second decoding units, a control unit (5) configured to control the decoding process of the first and second content obtained by the first and second decoding units on the basis of the comparison result obtained by the comparison unit, and an output unit (4,6) configured to output decoded video of the first and second content obtained by the first and second decoding units.

## Description

The present invention relates to a video playback apparatus and video playback method for playing back video data (DVD content and the like) including a main video and a sub-picture.

In recent years, DVD content has prevailed, and various DVD content playback techniques have been proposed. For example, in Jpn. Pat. Appln. KOKAI Publication No. 2004-128769, a technique for playing back an information recording medium on which main video information representing a main video, and sub-picture information representing a sub-picture capable of being at least partially displayed on the main video are recorded is disclosed.

As described above, various DVD content playback techniques are proposed. However, these techniques pertain to playback of the DVD content alone. That is, expandability is poor, thus posing a problem.

It is an object of the present invention to provide a video playback apparatus and video playback method which can assure high expandability of video playback.

According to an aspect of the present invention, there is provided a video playback apparatus comprising a first decoding unit configured to decode first content, a second decoding unit configured to decode second content, a comparison unit configured to compare the first content decoded by the first decoding unit with the second content decoded by the second decoding unit, a control unit configured to control a decoding process of the first content obtained by the first decoding unit and a decoding process of the second content obtained by the second decoding unit, on the basis of a comparison result obtained by the comparison unit, and an output unit configured to output a decoded video of the first content obtained by the first decoding unit and a decoded video of the second content obtained by the second decoding unit.

According to another aspect of the present invention, there is provided a video playback method comprising comparing first content decoded by a first decoding unit with second content decoded by a second decoding unit, controlling a decoding process of the first content obtained by the first decoding unit and a decoding process of the second content obtained by the second decoding unit, on the basis of a comparison result, and outputting a decoded video of the first content obtained by the first decoding unit and a decoded video of the second content obtained by the second decoding unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the schematic arrangement of a video playback apparatus according to an embodiment of the present invention;
FIG. 2 is a view showing a display image as an example of associated playback of Flash content and DVD content; and
FIG. 3 is a flowchart showing an example of associated playback of the Flash content and the DVD content.

An embodiment of the present invention will be described below with reference to the accompanying drawing.

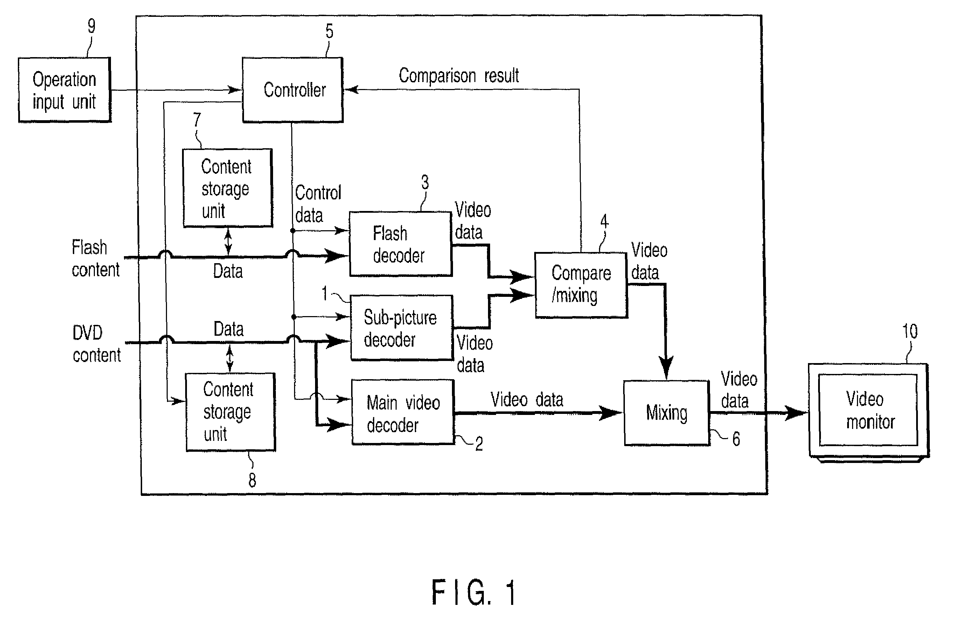

FIG. 1 is a block diagram showing the schematic arrangement of a video playback apparatus according to the embodiment of the present invention. This video playback apparatus can play back a plurality of independent content in association with each other. In this embodiment, as an example, a case in which DVD content (first content) and Flash content (second content) are played back in association with each other will be described.

As shown in FIG. 1, the video playback apparatus includes a sub-picture decoder 1, main video decoder 2, Flash decoder 3, compare/mixing unit 4, controller 5, mixing unit 6, Flash content storage unit 7, DVD content storage unit 8, operation input unit 9, and the like.

In the DVD-Video standard, there is no standard for associating the time or display position of DVD content which is recorded on a ROM disc in advance and includes main video data and sub-picture data, with that of other video content such as Flash content which is not recorded on the ROM disc. Hence, the DVD content video and the Flash content video cannot be played back in association with each other. For example, the DVD content video cannot be controlled in response to a given operation of the Flash content video.

In the video playback apparatus according to the present invention, the sub-picture data included in the DVD content can be compared with the video data included in the content other than the DVD content, and the DVD content and the content other than the DVD content can be operated in associated with each other on the basis of a comparison result. The sub-picture data included in the DVD content includes associated information (information indicating the position, size, and the like of the main video) pertaining to the main video data which is also included in the DVD content. This associated information is compared with the video data of the content other than the DVD content. That is, the main video of the DVD content is compared with the video of the content other than the DVD content, for each pixel or object. Note that the sub-picture data included in the DVD content can also include video data such as captions. In this embodiment, as an example of content other than the DVD content, Flash content will be described below.

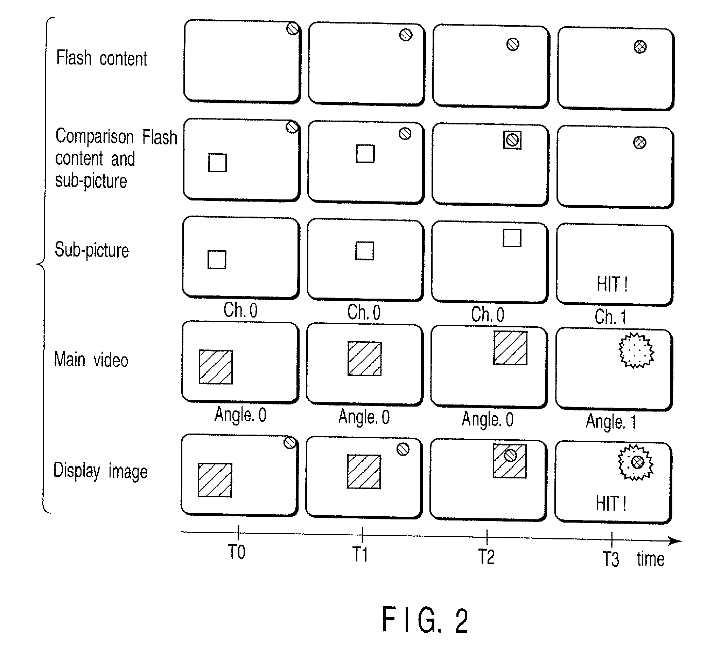

For example, as shown in FIG. 2, assume that the Flash content generated by Flash for a shooting game, and the separately generated DVD content are used. The DVD content includes the main video data (image data as a shooting target) for this shooting game, the sub-picture data including the associated information (information indicating the position, size, and the like of the shooting target) indicating the image content of this main video data, and the sub-picture data including the video data such as captions. Note that a maximum of 32 types of sub-picture data can be defined corresponding to the main video data of one frame.

Assume that the user can control, via the operation input unit 9, movement of a scope image displayed on the basis of the Flash content. When the display position of the scope image of the Flash content matches that of the target image of the DVD content, the target image is exploded (target image is switched). Alternatively, when these display positions do not match, nothing happens (target image is not switched). These operations are implemented as follows.

The sub-picture decoder 1 decodes the sub-picture data of the DVD content. The main video decoder 2 decodes the main video data of the DVD content. The Flash decoder 3 decodes the Flash content. The compare/mixing unit 4 compares the sub-picture data (associated information) of the decoded DVD content with the video data of the decoded Flash content, and then outputs the comparison result. On the basis of the comparison result, the controller 5 controls the decoding processes performed by the sub-picture decoder 1, main video decoder 2, and Flash decoder 3. That is, the compare/mixing unit 4 compares the pixels or object of the scope image of the Flash content with that of the target image of the DVD content, and then outputs the comparison result indicating matching (complete or partial matching) or mismatching. Upon reception of the comparison result indicating matching, the controller 5 controls the decoding process of each of the decoders, and switches the angle of the main video data from a current angle (video angle in which the target is not exploded) to another angle (video angle in which the target is exploded). Accordingly, the Flash content operation can be associated with the DVD content operation.

With reference to FIG. 2, in a time-series manner, in times T0 to T1, when the sub-picture data of the Flash content is compared with that of the DVD content, these data do not match. Hence, the compare/mixing unit 4 notifies the controller 5 of the comparison result indicating mismatching. Upon reception of the comparison result indicating mismatching, the controller 5 controls the decoders. The sub-picture decoder 1 decodes the sub-picture data (non-displayed information) of ChO, the main video decoder 2 decodes the main video data of AngleO, and the Flash decoder 3 decodes the Flash content. The compare/mixing unit 4 further compares the Flash content with the sub-picture data of Ch0, notifies the controller 5 of the comparison result, and outputs the Flash content to the mixing unit 6. Note that the compare/mixing unit 4 does not mix the sub-picture data (non-displayed information) of Ch0 and the Flash content. The mixing unit 6 mixes the Flash content from the compare/mixing unit 4 and the main video data of Angle0 from the main video decoder 2, and then outputs the mixed data as a display image to a video monitor 10 (times T1 to T2). Therefore, the main video of DVD content and the video of Flash content are actually displayed.

In time T2, when the Flash content is compared with the sub-picture data, they match. Hence, the compare/mixing unit 4 notifies the controller 5 of the comparison result indicating matching. Upon reception of the comparison result indicating matching, the controller 5 controls the decoders. The sub-picture decoder 1 decodes the sub-picture data (display information such as captions) of Ch1, the main video decoder 2 decodes the main video data of Angle1, and the Flash decoder 3 decodes the Flash content. The compare/mixing unit 4 mixes the Flash content and the sub-picture data of Ch1, and then outputs the mixed data to the mixing unit 6. The mixing unit 6 mixes the mixed data from the compare/mixing unit 4 with the main video data of Angle1 from the main video decoder 2, and then outputs the mixed data to the video monitor 10 (time T3). The main video and sub-picture of the DVD content, and the Flash content are actually displayed. The controller 5 may control the decoding process of the Flash decoder 3 to switch the Flash content display image displayed at time T3.

When the sub-picture data includes a video (captions and the like) as described above, the compare/mixing unit 4 can also control display/nondisplay on an entire or designated region of the video included in the sub-picture data. That is, the compare/mixing unit 4 can completely or partially turn off the video display included in the sub-picture data. For example, the compare/mixing unit 4 controls the contrast in the entire or designated region of the video included in the sub-picture data, and controls display/nondisplay of the region. Hence, the Flash content and the main video and sub-picture included in the DVD content can be simultaneously displayed in association with each other.

Also, since the Flash content is not recorded on the ROM disc unlike the DVD content, the Flash content can be played back in association with other DVD content.

The main video data of the DVD content is not directly compared with the video data of the Flash content, since the main video data of the DVD content includes data for each frame. That is, in order to recognize an object (e.g., person) displayed in a frame, an image recognition process with high precision is required, and a recognition ratio cannot always be 100%. Hence, the sub-picture data includes the associated information which indicates the position, size, and the like of the object. As defined in the DVD format, the main video in one frame can include a maximum of 32 types of sub-picture data (associated information). Additionally, although a plurality of objects cannot be displayed in the single frame using the sub-picture data, the same state can be implemented.

The sub-pictured data included in the DVD content includes two-bit pixel information, four-bit color information, and four-bit contrast information. When these pieces of information are compared with the Flash video data, comparison results at a plurality of levels can be obtained. That is, the matching degree between the main video data included in the DVD content and the Flash video data can be determined. For example, an advanced user of the shooting game can set a comparison precision high, and set a comparison region small to enjoy a difficult game. Alternatively, a beginner of the shooting game can set the comparison precision low, and set the comparison region large to enjoy an easy game.

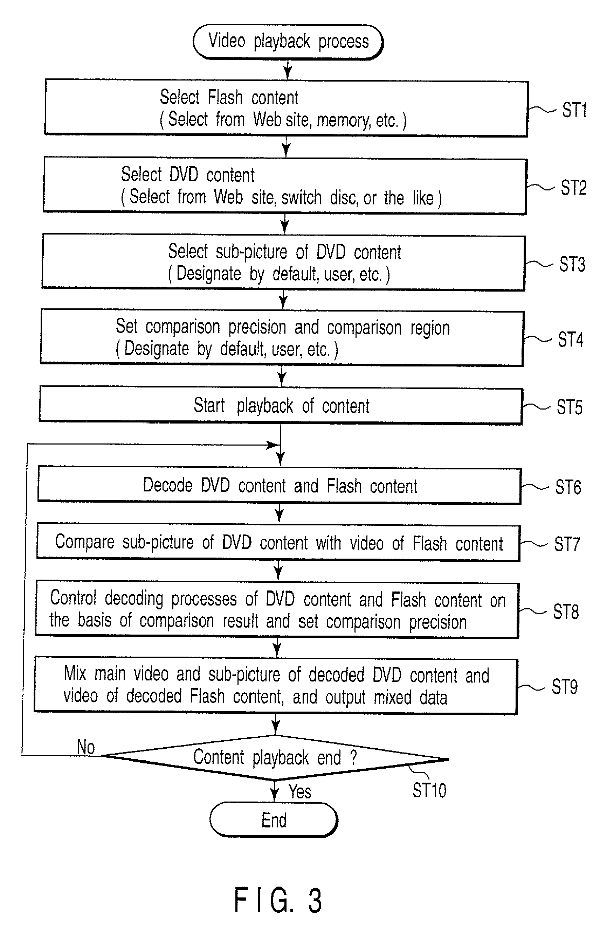

With reference to a flowchart shown in FIG. 3, an example of the video playback process using the associated content will be described below. The video playback apparatus according to the present invention can select some content from the plurality of content, and play back the selected content in association with each other. With reference to the flowchart shown in FIG. 3, as an example, a case in which one item of Flash content and one item of DVD content are selected from the plurality of content, and both these content items are played back in associated with each other will be described below.

For example, the user selects one item of Flash content from a Web site via the operation input unit 9 (ST1). Alternatively, the user selects, via the operation input unit 9, one item of Flash content from the plurality of Flash contents downloaded and stored in the Flash contents storage unit 7 in advance (ST1).

Furthermore, the user selects one item of DVD content from the Web site via the operation input unit 9 (ST2). Alternatively, the user selects, via the operation input unit 9, one item of DVD content from the plurality of DVD discs stored in advance in the DVD content storage unit 8 (e.g., disc changer) (ST2).

The user selects the sub-picture of the DVD content via the operation input unit 9 (ST3). As described above, the DVD content can include a maximum of 32 types of sub-picture data (associated information), so that the user can enjoy various playback modes by selecting these sub-picture data. Note that the sub-picture can be determined arbitrarily by the user or as a default.

The user can set the comparison precision and comparison region via the operation input unit 9 (ST4). The effect and the like obtained by setting the comparison precision and comparison region have been described, and a description thereof will be omitted. Note that the comparison precision and comparison region can also be determined by the user or as a default.

The sub-picture decoder 1 and main video decoder 2 start to play back the selected DVD content, and the Flash decoder 3 starts to play back the selected Flash content (ST6). The compare/mixing unit 4 compares the sub-picture data (associated information) of the DVD content with the Flash content, and then outputs the comparison result. On the basis of the comparison result and the setting comparison precision and comparison region, the controller 5 controls the decoding processes performed by the sub-picture decoder 1, main video decoder 2, and Flash decoder 3 (ST8). Under this decoding control, the main video and sub-picture (video data such as captions) of the DVD content output from the sub-picture decoder 1 and main video decoder 2 are switched, and the Flash content video output from the Flash decoder 3 is switched. As a result, the mixing unit 6 mixes the DVD content and the Flash content to output an image of the associated content (ST9). Processes ST6 to ST9 continue until playback of the content is finished (ST10).

As described above, according to the present invention, various playback modes can be enjoyed by associating various content. Note that the content to be associated may be DVD content. The data included in the content to be associated may also be bitmap data or digital still image data such as JPEG data.

## Claims

1. A video playback apparatus **characterized by** comprising:
a first decoding unit (1, 2) configured to decode first content;
a second decoding unit (3) configured to decode second content;
a comparison unit (4) configured to compare the first content decoded by the first decoding unit with the second content decoded by the second decoding unit;
a control unit (5) configured to control a decoding process of the first content obtained by the first decoding unit and a decoding process of the second content obtained by the second decoding unit, on the basis of a comparison result obtained by the comparison unit; and
an output unit (4, 6) configured to output decoded video of the first content obtained by the first decoding unit and decoded video of the second content obtained by the second decoding unit.

2. An apparatus according to claim 1,
**characterized in that**
the first decoding unit includes a main video decoding unit (2) configured to decode main video data included in the first content, and a sub-picture decoding unit (1) configured to decode sub-picture data which is included in the first content and has information associated with the main video data, and
the comparison unit compares the associated information included in the sub-picture data with the second content.

3. An apparatus according to claim 1,
**characterized in that**
the first decoding unit includes a main video decoding unit (2) configured to decode main video data included in the first content, and a sub-picture decoding unit (1) configured to decode sub-picture data which is included in the first content and has position information and size information of the main video data, and
the comparison unit compares the position information and size information of the first content with the second content, on the basis of the position information and the size information included in the sub-picture data.

4. An apparatus according to claim 2,
**characterized in that** the control unit controls to switch the main video data included in the first content, on the basis of a comparison result obtained by the comparison unit.

5. An apparatus according to claim 3,
**characterized in that** the control unit controls to switch the main video data included in the first content, on the basis of a comparison result obtained by the comparison unit.

6. An apparatus according to claim 2,
**characterized in that** the control unit controls to switch the sub-picture data included in the first content, on the basis of a comparison result obtained by the comparison unit.

7. An apparatus according to claim 3,
**characterized in that** the control unit controls to switch the sub-picture data included in the first content, on the basis of a comparison result obtained by the comparison unit.

8. An apparatus according to claim 2, which further comprises a reception unit (9) configured to receive a setting of a comparison precision level, and in which the control unit controls to switch the main video data and the sub-picture data included in the first content, on the basis of the comparison result and the comparison precision level obtained by the comparison unit.

9. An apparatus according to claim 3, which further comprises a reception unit (9) configured to receive a setting of a comparison precision level, and in which the control unit controls to switch the main video data and the sub-picture data included in the first content, on the basis of the comparison result and the comparison precision level obtained by the comparison unit.

10. An apparatus according to claim 1,
**characterized by** further comprising a selection input unit (9) configured to select a candidate of the second content from a plurality of content, and input the selected candidate to the second decoding unit.

11. An apparatus according to claim 1,
**characterized by** further comprising
a storage unit (7) configured to store the plurality of content, and
a selection input unit (9) configured to select a candidate of the second content from the plurality of content stored in the storage unit, and input the selected candidate to the second decoding unit.

12. An apparatus according to claim 1,
**characterized by** further comprising a selection input unit (9) configured to select a candidate of the first content from a plurality of content, and input the selected candidate to the first decoding unit.

13. An apparatus according to claim 2,
**characterized by** further comprising
a selection input unit (9) configured to select a candidate of the first content from the plurality of content, select predetermined sub-picture data from the plurality of sub-picture data included in the selected first content, input the main video data included in the selected first content to the main video decoder, and input predetermined sub-picture data which is selected and included in the selected first content to the sub-picture decoder.

14. A video playback method **characterized by** comprising:
comparing first content decoded by a first decoding unit with second content decoded by a second decoding unit (ST7);
controlling a decoding process of the first content obtained by the first decoding unit and a decoding process of the second content obtained by the second decoding unit, on the basis of a comparison result (ST8); and
outputting decoded video of the first content obtained by the first decoding unit and decoded video of the second content obtained by the second decoding unit (ST9).
